**Europäisches Patentamt**

**European Patent Office**

**Office européen des brevets**

(19)

(11) Veröffentlichungsnummer : **0 375 707 B1**

(12)

# EUROPÄISCHE PATENTSCHRIFT

(45) Veröffentlichungstag der Patentschrift :
**12.02.92 Patentblatt 92/07**

(51) Int. Cl.$^5$ : **B23K 20/10**

(21) Anmeldenummer : **88907066.0**

(22) Anmeldetag : **28.07.88**

(86) Internationale Anmeldenummer :
**PCT/EP88/00686**

(87) Internationale Veröffentlichungsnummer :
**WO 89/01384 23.02.89 Gazette 89/05**

(54) **WERKZEUGANORDNUNG ZUM ULTRASCHALL-SCHWEISSEN.**

(30) Priorität : **17.08.87 DE 3727406**

(43) Veröffentlichungstag der Anmeldung :
**04.07.90 Patentblatt 90/27**

(45) Bekanntmachung des Hinweises auf die
Patenterteilung :
**12.02.92 Patentblatt 92/07**

(84) Benannte Vertragsstaaten :
**CH DE FR GB LI NL**

(56) Entgegenhaltungen :
**EP-A- 0 116 010**

(56) Entgegenhaltungen :
**DE-B- 1 185 041**
**FR-A- 2 028 878**
**GB-A- 2 165 178**
**US-A- 3 695 500**

(73) Patentinhaber : **SIEMENS**
**AKTIENGESELLSCHAFT**
**Wittelsbacherplatz 2**
**W-8000 München 2 (DE)**

(72) Erfinder : **KRAUSE, Ralf, Dieter**
**Reichenschwander Str. 18**
**W-8500 Nürnberg (DE)**
Erfinder : **MOLL, Helmut**
**Haselhofstr. 32**
**W-8520 Erlangen (DE)**

## Beschreibung

Die Erfindung bezieht sich auf eine Werkzeuganordnung zum Ultraschallschweißen, bestehend aus Sonotrode als aktives Werkzeug und Amboß als Aufnahmewerkzeug für die Werkstücke, wobei zumindest die Sonotrode an ihren Arbeitsflächen, über die der Ultraschall in die zu verschweißenden Werkstücke eingekoppelt wird, mit einer verschleißmindernden Schicht versehen ist. Eine solche Werkzeuganordnung soll sowohl zum Ultraschall-Kunststoffschweißen als auch Metallschweißen und insbesondere auch zum Bonden dünner Drähte verwendet werden.

Speziell beim Ultraschall-Schweißen von Metallen wird die Schwingungsamplitude durch die Rauhigkeit der Arbeitsfläche der Sonotrode in das oben liegende Werkstück eingeleitet. Eine reproduzierbare Schwingungseinleitung ist eine Grundvoraussetzung für eine gleichbleibende Schweißqualität. Ebenso wichtig ist das Fixieren des dem Amboß zugeordneten Teils. Auch hier wird das Fügeteil oft durch eine Oberflächenrauhigkeit des Ambosses festgehalten, wofür letzterer beispielsweise durch Sandstrahlen oder Erodieren mit Querrillen oder sogenannten Waffelmustern und dgl. versehen ist. Durch derartige konstruktive Maßnahmen kann sichergestellt werden, daß die zum Ultraschall-Schweißen notwendige reproduzierbare Relativbewegung als Reibbewegung in der Fügefläche entsteht.

Insbesondere beim Ultraschall-Schweißen von harten Metallen verschleißen die rauhen Arbeitsflächen an der Sonotrode und am Amboß im Fertigungseinsatz sehr schnell. Werden die Rauhtiefen sehr groß gewählt, um längere Standzeiten der Werkzeuge zu erhalten, entstehen an den Fügeteilen starke Eindrücke, z.B durch das sogenannte Waffelmuster. Derartige Eindrücke können neben der unschönen Optik auch als Beschädigungen zu Qualitätsbeeinträchtigungen an den Werkstücken führen, wie geringe Scher- bzw. Schälfestigkeit oder auch Durchtrennen der Teile. Bei zu geringer Rauhigkeit bleibt dagegen, wie insbesondere beim Schweißen von Teilen aus Aluminium oder deren Legierungen, Material an der Sonotrode und am Amboß haften. Dadurch kann nach dem Ultraschall-Schweißen beim Öffnen der Schweißpresse die Verbindung teilweise oder vollständig wieder auseinandergerissen werden.

Bei Ultraschall-Schweißanlagen des Standes der Technik müssen daher regelmäßig die Arbeits- bzw. Auflageflächen der Werkzeuge nachgearbeitet oder aber von vornherein mit auswechselbaren Stiften versehen werden. Bekannt ist auch das Beschichten der Werkzeuge. Es ist bereits insbesondere vorgeschlagen, die Sonotrode an ihren Arbeitsflächen mit verschleißmindernden Schichten zu versehen.

Aus der GB-A-21 65 178 ist eine Werkzeuganordnung zum Draht-Bonden beschrieben, bei dem speziell das Bond-Werkzeug mit einem solchen Material beschichtet ist, welches keine physikochemische Reaktion mit dem Bonddraht eingeht. Insbesondere bei Aluminium-Drähten kann die Schicht beispielsweise ein sogenanntes Cermet, also ein Material mit den thermischen Eigenschaften von Keramik und der Härte von Metall sein. Dazu können insbesondere Oxide wie $Al_2O_3$, BeO, $ZrO_2$ und $ThO_2$, Karbide wie TiC, ZrC, $B_4C$ und WC oder Boride wie CrB und $ZrB_2$ oder Kombinationen davon verwendet werden. Aufgebracht werden diese Schichten als Dünnfilme beispielsweise durch CVD-Verfahren oder Ionenplatieren. Ganz entsprechend ist in der EP-A-0 116 010 ein Schweißwerkzeug beschrieben, das mit einer Schicht von $Al_2O_3$ unter Zwischenlage einer Nitridschicht versehen ist.

Die Verwendung von durch CVD- bzw. PVD-Verfahren aufgebrachten verschleißmindernden Schichten bei Ultraschall-Werkzeugen ist insgesamt problematisch. Es muß eine echte stoffschlüssige Verbindung gewährleistet sein. In der FR-A-20 28 878 wird darüber hinaus vorgeschlagen, eine Sonotrode im Bereich ihrer Arbeitsfläche mit einer durch Plasmaspritzen aufgetragenen, aus Nickel-Aluminit versehenen Haftschicht zu überziehen, die Träger einer ebenfalls durch Plasmaspritzen aufgetragenen Metalloxid-Schicht aus insbesondere Aluminiumoxid ($Al_2O_3$) oder Titanoxid ($TiO_2$) ist. Allerdings haben sich auch derartige Schichten als nicht praxisgerecht erwiesen.

Weiterhin ist aus der DE-B-11 85 041 eine Sonotrode mit einem Einsatz aus Edel- bzw. Halbedelsteinen wie beispielsweise einem. Saphir ($Al_2O_3$) bekannt. Solche einkristallinen Einsätze mit kristallographisch orientierten Grenzflächen sollen insbesondere das Kleben der zu verschweißenden Werkstücke am Werkzeug verhindern. Es hat sich allerdings gezeigt, daß bei einer Langzeitverwendung derartiger Einsätze in Ultraschall-Werkzeugen es häufig zu einem Brechen bzw. Splittern der Einsätze kommen kann. Insofern wird dadurch ebenfalls der Verschleißfestigkeit für den Langzeitbetrieb entgegengewirkt.

Aufgabe der Erfindung ist es daher, eine Werkzeuganordnung für das Ultraschall-Schweißen zu schaffen, bei der die Verschleißfestigkeit der Arbeitsflächen verbessert ist.

Die Aufgabe ist erfindungsgemäß dadurch gelöst, daß die verschleißmindernde Schicht aus polykristallinem Diamant (PKD) besteht. Vorzugsweise weist auch der Amboß an seinen Arbeitsflächen eine verschleißmindernde Schicht aus polykristallinem Diamant (PKD) auf.

Polykristalliner Diamant (PKD) wird bereits zur Beschichtung von spanabhebenden Werkzeugen verwendet. Er zeichnet sich vorteilhafterweise durch verbesserte Härteeigenschaften gegenüber den üblichen Hartmetallen aus, was aber zwangsläufig mit einer höheren Sprödigkeit und Bruchanfälligkeit verbunden ist, aufgrund deren eine Verwendung für Ultraschall-Werkzeuge an sich nicht zu erwarten ist.

Im Rahmen der Erfindung konnte aber gezeigt werden, daß beispielsweise der polykristalline Diamant trotz seiner Sprödigkeit den Ultraschallschwingungen standhält und damit zur Verwendung bei Ultraschall-Werkzeuganordnungen geeignet ist. Vorteilhafterweise kann der polykristalline Diamant einen homogenen Verbundwerkstoff aus nahezu 100 %-iger Konzentration auf einer Hartmetall-Trägermatrix, die einen lötbaren Sockel bildet, definieren.

Weitere Einzelheiten und Vorteile der Erfindung ergeben sich aus der nachfolgenden Figurenbeschreibung von Ausführungsbeispielen anhand der Zeichnung in Verbindung mit den weiteren Unteransprüchen. Es zeigen jeweils in grob schematischer Darstellung

FIG 1 eine Werkzeuganordnung zum Ultraschall-Metallschweißen,

FIG 2 eine Werkzeuganordnung zum Ultraschall-Kunststoffschweißen oder -nieten,

FIG 3 einen Sonotrodenkopf mit Bondkeil zum Bonden dünner Drähte und

FIG 4 eine Variante des Bondkeiles gemäß FIG 3 in dazu senkrechter Blickrichtung,

FIG 5 eine Variante des Einsatzes der Werkzeuganordnung gemäß FIG 1.

Die Figuren sind nicht streng maßstäblich zueinander gezeichnet. Sie werden nachfolgend teilweise zusammen beschrieben.

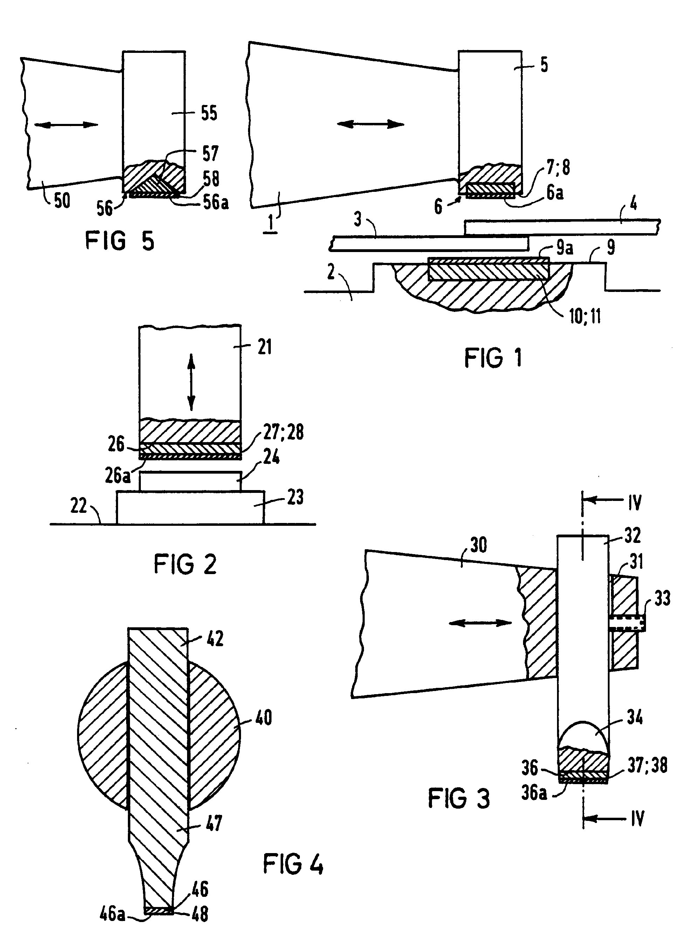

In FIG 1 stellt 1 eine Sonotrode mit durch den Doppelpfeil angegebener Schwingungsrichtung dar, die einem Amboß 2 zugeordnet ist. Zwischen Sonotrode 1 und Amboß 2 sind zwei zu verschweißende metallische Werkstückteile 3 und 4 angedeutet. Derartige Ultraschall-Werkzeuganordnungen sind vom Stand der Technik in vielen Ausgestaltungen vorbekannt.

Die Sonotrode 1 hat proximal einen Sonotrodenkopf 5, der an seiner Arbeitsfläche 6 einen kraftschlüssig eingepaßten Einsatz 7 bzw. 8 aufweist. Entsprechend ist in die Arbeitsfläche 9 der des Ambosses 2 ein Einsatz 10 bzw. 11 eingebracht. Auf den Aufbau und Funktion dieser Einsätze, welche erfindungsgemäß als neue Arbeitsflächen 6a bzw. 9a wirken, wird weiter unten im Gesamtzusammenhang im einzelnen eingegangen.

In FIG 2 ist die Sonotrode einer Werkzeuganordnung für das Ultraschall-Schweißen bzw. -Vernieten von Kunststoffteilen mit 21 bezeichnet, die mit ihrer Arbeitsfläche 26 der Auflagenfläche 22 eines Ambosses gegenüberliegt. Zwischen beiden Werkzeugteilen sind zwei zu verbindende Kunststoffteile 23 und 24 angedeutet.

Beim Verschweißen bzw. Vernieten von Kunststoffteilen liegt die Schwingungsrichtung der Sonotrode in der senkrechten, durch den Doppelpfeil angedeuteten Richtung. Üblicherweise sind hier die Schweißkräfte geringer. Auf der ursprünglichen Arbeitsfläche 26 der Sonotrode 21 ist kraft- und formschlüssig ein Aufsatz 27 bzw. 28 aufgebracht, der in seiner Funktion den Einsätzen 7, 8 bzw. 10, 11 der FIG 1 entspricht. Es wird so eine neue Arbeitsfläche 26a definiert.

In FIG 3 stellt 30 den proximalen Teil einer Sonotrode dar. Für das Bonden dünner Drähte ist in senkrechter Richtung in eine Durchbohrung 31 der Sonotrode 30 ein sogenannter Bondkeil 32 eingebracht und durch eine Stellschraube 33 fixiert. Der Bondkeil 32 kann sich zu seinem Arbeitsbereich hin - in senkrechter Richtung zur Zeichenebene - verjüngen, um die wirksame Ultraschall-Amplitude zu vergrößern. Letzteres ist durch die Parabellinie 34 angedeutet. Auf der ursprünglichen Arbeitsfläche 26 des Bondkeils 32 ist ein Aufsatz 37 bzw. 38 aufgebracht, der den Einsätzen 7, 8 bzw. 10, 11 der FIG 1 und dem Aufsatz 27, 28 der FIG 2 entspricht.

Die Einsätze 7, 8 und 10, 11 der FIG 1 sowie die Aufsätze 27, 28 der FIG 2 und 37, 38 der FIG 3 bestehen jeweils aus einem lötfähigen Sockel, d.h. dem Bereich 7, 10, 27 bzw. 37 und einer Schicht aus polykristallinen Diamant 8, 11, 28 bzw. 38 von beispielsweise 0,7 mm, was in dieser Form als Fertigprodukt kommerziell erhältlich ist. Dabei kann der Sockel durch Lötung fest mit dem jeweiligen Werkzeug verbunden werden.

Vom Hersteller wird der polykristalline Diamant (PKD) unter hohem Druck und hoher Temperatur als homogener Verbundwerkstoff aus einer nahezu 100 %igen Konzentration aus synthetischen Diamant-Monokristallen erzeugt und unmittelbar mit einer Hartmetall-Trägermatrix verbunden. Der Hartmetallsockel macht diesen Verbundwerkstoff lötbar. Polykristalliner Diamant (PKD) zeichnet sich bekanntermaßen durch besondere Härte, hohe Sprödigkeit und Bruchanfälligkeit aus.

Über die Hartmetallmatrix wurde Polykristalliner Diamant (PKD) durch Hartlöten mit der bisherigen Arbeitsfläche einer Sonotrode zum Metallschweißen verbunden und aufgerauht. Entgegen den Erwartungen hielt der spröde PKD den Ultraschall-Schwingungen mit einer Frequenz zwischen 20 und 60 kHz und Amplituden von bis zu 50 µm stand. Im Rahmen einer automatisierten Fertigungslinie zeigte sich, daß beim Ultraschall-Schweißen von Kupferdrähten die Standzeit der neuen Werkzeuganordnungen um zwei Größenordnungen über die von bekannten Werkzeuganordnung mit üblichen Hartmetallbeschichtungen liegt.

Außer dem Anschweißen von dünnen Kupferdrähten kann eine derartige Werkzeuganordnung beispielsweise beim Anschweißen von Aluminium-Streifen für Elektrolytkondensatoren eingesetzt werden. Bei solchen Schweißaufgaben tritt üblicherweise das Problem auf, daß die gut haftenden Werkstoffe, wie beispielsweise das Aluminium oder Aluminiumlegierungen, am Amboß und/oder an den Sonotrodenarbeitsflächen ankleben.

Durch den Einsatz von polykristallinem Diamant (PKD) am Amboß konnte das Problem des Festklebens vollständig gelöst werden.

Speziell in FIG 4 ist ein Ausführungsbeispiel gezeigt, bei dem der Bondkeil 42 einer Ultraschall-Sonotrode 40 insgesamt aus einem Hartmetall 47 als Trägermatrix besteht, auf den zur Arbeitsfläche 46 hin eine Schicht 48 aus polykristallinem Diamant (PKD) aufgebracht ist. Es ergibt sich eine Fertigungsvereinfachung, da der Anlötvorgang entfällt und unmittelbar die Arbeitsfläche 46a definiert ist.

Aus FIG 5 ergibt sich, daß in einem Sonotrodenkopf 55 einer Sonotrode 50 ein solcher Einsatz kraftschlüssig eingebracht ist, bei dem sich eine Schicht 58 aus polykristallinem Diamant (PKD) auf einem rückseitig winkelig ausgebildeten Sockel 57 befindet. Dieser Einsatz 57, 58 läßt sich im Sonotrodenkopf besser verankern: Einerseits wird die zu verlötende Grenzfläche insgesamt vergrößert, andererseits werden die beim Ultraschall-Schweißen auf die Grenzfläche wirkenden Scherbeanspruchungen durch abwechselnde Druck- und Zugspannungen ersetzt.

Ein Einsatz für den Amboß gemäß FIG 1 kann ganz entsprechend FIG 5 einen winkelig ausgebildeten Sockel haben.

Bei den im einzelnen beschriebenen Beispielen ist es aufgrund des separaten Einsatzes immer möglich, eine vergleichsweise dicke Schicht aus polykristallinen Diamant (PKD) vorzusehen. Hierin liegt ein grundsätzlicher Unterschied zu den bekannten, beispielsweise durch PVD- und/oder CVD-Verfahren erzeugten Beschichtungen, die üblicherweise allenfalls im µm-Bereich liegen. Es hat sich gezeigt, daß derartige bekannte Schichten für Ultraschallwerkzeuge aufgrund des hohen Abriebes bei in horizontaler Richtung schwingender Sonotrode ungeeignet sind. Demgegenüber läßt sich polykristalliner Diamant (PKD) in feinkristalliner Form zu Schichten beliebiger Dicke herstellen. Bei solchen polykristallinen Schichten mit Dicken ab ca. 100 µm (> 0,1 mm) ergeben sich die Eigenschaften eines kompakten Festkörpers: Beispielsweise liegen bei Einsätzen aus einem kommerziell erhältlichen Hartmetall-Sockel mit polykristallinen Diamant (PKD) bei einer Dicke von 0,5 mm insgesamt isotrope Verhältnisse aufgrund der Vielzahl der regellos angeordneten einzelnen Monokristalle vor, was auch eine mechanische Bearbeitung der Oberfläche zuläßt. Dadurch ist der polykristalline Diamant (PKD) bei genügender Dicke den hohen Belastungen beim Ultraschallschweißen gewachsen.

Da bei den beschriebenen Ausführungsbeispielen die Dicke der Schicht aus polykristallinem Diamant (PKD) immer vergleichsweise groß ist, beispielsweise 0,7 mm, liegt sie im allgemeinen über der geforderten Rauhigkeit der Arbeitsfläche. Durch entsprechende Bearbeitungsverfahren, insbesondere durch Erodieren, kann zusätzlich eine solche Rauhigkeit eingebracht werden. Darüber hinaus kann die Oberfläche der Schicht aus polykristallinem Diamant (PKD) mit einer Kontur, beispielsweise einer Rillenstruktur oder einem sogenannten Waffelmuster, versehen werden.

## Patentansprüche

1. Werkzeuganordnung zum Ultraschall-Schweißen, bestehend aus Sonotrode (1, 21, 30, 40, 50) als aktives Werkzeug und Amboß (2, 22) als Aufnahmewerkzeug für die Werkstücke (3, 4, 23, 24), wobei zumindest die Sonotrode (1, 21, 30, 40, 50) an ihren Arbeitsflächen (6, 26, 36, 46, 56), über die der Ultraschall in die zu verschweißenden Werkstücke (3, 4, 23, 24) eingekoppelt wird, mit einer verschleißmindernden Schicht (8, 11, 28, 38, 48, 58) versehen ist, **dadurch gekennzeichnet**, daß die verschleißmindernde Schicht (8, 11, 28, 38, 48, 58) aus polykristallinem Diamant (PKD) besteht.

2. Werkzeuganordnung nach Anspruch 1, **dadurch gekennzeichnet**, daß auch der Amboß (2) an seinen Arbeitsflächen (9) eine verschleißmindernde Schicht aus polykristallinem Diamant (PKD) aufweist.

3. Werkzeuganordnung nach Anspruch 1 oder Anspruch 2, **dadurch gekennzeichnet**, daß der polykristalline Diamant (PKD) einen homogenen Verbundwerkstoff aus nahezu 100 %iger Konzentration auf einer Hartmetall-Trägermatrix, die einen lötbaren Sockel (7, 10, 27, 37) bildet, definiert.

4. Werkzeuganordnung nach einem der vorhergehenden Ansprüche, **dadurch gekennzeichnet**, daß der Sockel (7, 10, 57) mit dem Verbundwerkstoff einen kraftschlüssig verbundenen Einsatz in den Arbeitsflächen (6, 9, 56) von Sonotrode (1, 21, 50) und/oder Amboß (2) bildet und daß durch den polykristallinen Diamant (PKD) eine neue Arbeitsfläche (6a, 9a, 56a) gebildet ist.

5. Werkzeuganordnung nach einem der vorhergehenden Ansprüche, **dadurch gekennzeichnet**, daß der Sockel (27, 37) mit dem Verbundwerkstoff einen kraft- und formschlüssigen Aufsatz auf der Arbeitsfläche (26, 36) von Sonotrode (21, 31) und/oder Amboß bildet und daß durch den polykristallinen Diamant (PKD) eine neue Arbeitsfläche (26a, 36a) gebildet ist.

6. Werkzeuganordnung nach einem der vorhergehenden Ansprüche, **dadurch gekennzeichnet**, daß die Dicke der Schicht (8, 11, 28, 48, 58) aus polykristallinen Diamant (PKD) größer ist als die geforderte Rauhigkeit der Arbeitsfläche (6, 9, 26, 36, 46, 56).

7. Werkzeuganordnung nach einem der vorhergehenden Ansprüche, **dadurch gekennzeichnet**, daß die Schicht (8, 11, 28, 48, 58) aus polykristallinen Diamant (PKD) eine vorgegebene Oberflächenkontur, beispielsweise eine Rillenstruktur oder ein sogenanntes Waffelmuster, aufweist.

8. Werkzeuganordnung nach einem der vorhergehenden Ansprüche, wobei die Sonotrode einen Bondkeil zum Bonden dünner Drähte aufweist, **dadurch gekennzeichnet**, daß der Bondkeil (32) einen Ein- oder Aufsatz (37) aus Verbundwerkstoff mit der Hartmetall-Trägermatrix und der Schicht (38) aus polykristallinen Diamant (PKD) aufweist.

9. Werkzeuganordnung nach einem der vorhergehenden Ansprüche, wobei die Sonotrode einen Bondkeil zum Bonden dünner Drähte aufweist, **dadurch gekennzeichnet**, daß der Bondkeil (42) insgesamt die Trägermatrix (47) für die Schicht (48) aus polykristallinen Diamant (PKD) mit Arbeitsfläche (46a) bildet.

10. Werkzeuganordnung nach einem der vorhergehenden Ansprüche, **dadurch gekennzeichnet**, daß die Schicht (8, 11, 28, 38, 48, 58) aus polykristallinen Diamant (PKD) dicker als 0,1 mm, vorzugsweise > 0,5 mm, ist.

11. Werkzeuganordnung nach einem der vorhergehenden Ansprüche 1 bis 8 oder 10, **dadurch gekennzeichnet**, daß der Sockel (57) des kraftschlüssig mit der Sonotrode (50) verbundenen Einsatzes (57, 58) winkelig ausgebildet ist.

**Revendications**

1. Agencement d'outillage pour le soudage par ultrasons, constitué d'une sonotrode (1, 21, 30, 40, 50) comme outil actif et d'une enclume (2, 22) comme outil de réception des pièces (3, 4, 23, 24), au moins la sonotrode (1, 21, 30, 40, 50) étant munie, sur ses surfaces de travail (6, 26, 36, 46, 56) par lesquelles les ultrasons sont couplés aux pièces (3, 4, 23, 24) à souder, d'une couche (8, 11, 28, 38, 48, 58) diminuant l'usure, caractérisé en ce que la couche (8, 11, 28, 38, 48, 58) diminuant l'usure est en diamant polycristallin (PKD).

2. Agencement d'outillage suivant la revendication 1, caractérisé en ce que l'enclume (2) comporte également, sur ses surfaces de travail (9), une couche diminuant l'usure en diamant polycristallin (PKD).

3. Agencement d'outillage suivant la revendication 1 ou la revendication 2, caractérisé en ce que le diamant polycristallin (PKD) définit un matériau composite homogène d'une concentration proche de 100 % sur une matrice-support en métal dur qui forme une embase (7, 10, 27, 37) pouvant être brasée.

4. Agencement d'outillage suivant l'une des revendications précédentes, caractérisé en ce que l'embase (7, 10, 57) forme, avec le matériau composite, une pièce d'insertion dans les surfaces de travail (6, 9, 56) de la sonotrode (1, 21, 50) et/ou de l'enclume (2)? qui est reliée par coopération de forces, et en ce qu'une nouvelle surface de travail (6a, 9a, 56a) est formée par le diamant polycristallin (PKD).

5. Agencement d'outillage suivant l'une des revendications précédentes, caractérisé en ce que l'embase (27, 37) forme, avec le matériau composite, une garniture à coopération de forces et de formes sur la surface de travail (26, 36) de la sonotrode (21, 31) et/ou de l'enclume, et en ce qu'une nouvelle surface de travail (26a, 36a) est formée par le diamant polycristallin (PKD).

6. Agencement d'outillage suivant l'une des revendications précédentes, caractérisé en ce que l'épaisseur de la couche (8, 11, 28, 48,,58) en diamant polycristallin (PKD) est supérieure à la rugosité exigée de la surface de travail (6, 9, 26, 36, 46, 56).

7. Agencement d'outillage suivant l'une des revendications précédentes, caractérisé en ce que la couche (8, 11, 28, 48, 58) en diamant polycristallin (PKD) comporte un contour superficiel prescrit, par exemple une structure rainurée ou ce que l'on appelle un dessin gaufré.

8. Agencement d'outillage suivant l'une des revendications précédentes, dans lequel la sonotrode comporte un coin de liaison, en vue de relier des fils métalliques minces, caractérisé en ce que le coin de liaison (32) comporte une pièce d'insertion ou une pièce destinée à être enfilée (37) en matériau composite, avec la matrice-support en métal dur et la couche (38) en diamant polycristallin (PKD).

9. Agencement d'outillage suivant l'une des revendications précédentes, dans lequel la sonotrode comporte un coin de liaison pour relier des fils métalliques minces, caractérisé en ce que le coin de liaison (42) forme, dans son ensemble, la matrice-support (47) pour la couche (48) en diamant polycristallin (PKD) ayant la surface de travail (46a).

10. Agencement d'outillage suivant l'une des revendications précédentes, caractérisé en ce que la couche ( 8, 11, 28, 38, 48, 58) en diamant polycristallin (PKD) a une épaisseur supérieure à 0,1 mm et, de préférence, supérieure à 0,5 mm.

11. Agencement d'outillage suivant l'une des revendications précédentes 1 à 8 ou 10, caractérisé en ce que l'embase (57) de la pièce d'insertion (57, 58), reliée à la sonotrode (50) par coopération de forces, est anguleuse.

## Claims

1. Tool arrangement for ultrasonic welding, comprising a sonotrode (1, 21, 30, 40, 50) as an active tool and an anvil (2, 22) as a mounting tool for the workpieces (3, 4, 23, 24), whereby at least the sonotrode (1, 21, 30, 40, 50) is provided with a wear-reducing layer (8, 11, 28, 38, 48, 58) on its working surfaces (6, 26, 36, 46, 56), by means of which the ultrasound is coupled into the workpieces (3, 4, 23, 24) to be welded, characterized in that the wear-reducing layer (8, 11, 28, 38, 48, 58) consists of polycrystalline diamond (PCD).

2. Tool arrangement according to claim 1, characterized in that the anvil (2) also has a wear-reducing layer of polycrystalline diamond (PCD) on its working surfaces (9).

3. Tool arrangement according to claim 1 or claim 2, characterized in that the polycrystalline diamond (PCD) defines a homogeneous composite material of nearly 100% concentration on a hard-metal carrier matrix which forms a base (7, 10, 27, 37) capable of being soldered.

4. Tool arrangement according to one of the preceding claims, characterized in that the base (7, 10, 57) together with the composite material forms a frictionally connected insert in the working surfaces (6, 9, 56) of the sonotrode (1, 21, 50) and/or of the anvil (2) and in that by means of the polycrystalline diamond (PCD) a new working surface (6a, 9a, 56a) is formed.

5. Tool arrangement according to one of the preceding claims, characterized in that the base (27, 37) together with the composite material forms a frictional and form-locking attachment on the working surface (26, 36) of the sonotrode (21, 31) and/or of the anvil, and in that by means of the polycrystalline diamond (PCD) a new working surface (26a, 36a) is formed.

6. Tool arrangement according to one of the preceding claims, characterized in that the thickness of the layer (8, 11, 28, 48, 58) of polycrystalline diamond (PCD) is greater than the required roughness of the working surface (6, 9, 26, 36, 46, 56).

7. Tool arrangement according to one of the preceding claims, characterized in that the layer (8, 11, 28, 48, 58) of polycrystalline diamond (PCD) has a specified surface contour, for example a grooved structure or a so-called waffle pattern.

8. Tool arrangement according to one of the preceding claims, whereby the sonotrode has a bonding cotter to bond thin wires, characterized in that the bonding cotter (32) has an insert or attachment (37) made of composite material with the hard-metal carrier matrix and the layer (38) of polycrystalline diamond (PCD).

9. Tool arrangement according to one of the preceding claims, whereby the sonotrode has a bonding cotter to bond thin wires, characterized in that the bonding cotter (42) as a whole forms the carrier matrix (47) for the layer (48) of polycrystalline diamond (PCD) with working surface (46a).

10. Tool arrangement according to one of the preceding claims, characterized in that the layer (8, 11, 28, 38, 48, 58) is made of polycrystalline diamond (PCD) thicker than 0.1 mm, preferably > 0.5 mm.

11. Tool arrangement according to one of the preceding claims 1 to 8 or 10, characterized in that the base (57) of the insert (57, 58), frictionally connected to the sonotrode (50), is constructed in an angular manner.

FIG 5

FIG 1

FIG 2

FIG 3

FIG 4